## Europäisches Patentamt

## European Patent Office

## Office européen des brevets

(19)

(11) Veröffentlichungsnummer: **0 263 947**
**B1**

(12) **EUROPÄISCHE PATENTSCHRIFT**

(45) Veröffentlichungstag der Patentschrift:
**03.01.90**

(51) Int. Cl.⁴: **B23F 19/02**

(21) Anmeldenummer: **87112021.8**

(22) Anmeldetag: **19.08.87**

(54) Maschine zum Läppen von zwei bogenverzahnten Kegelrädern.

(30) Priorität: **03.10.86  CH 3950/86**

(43) Veröffentlichungstag der Anmeldung:
**20.04.88 Patentblatt 88/16**

(45) Bekanntmachung des Hinweises auf die Patenterteilung:
**03.01.90 Patentblatt 90/1**

(84) Benannte Vertragsstaaten:
**BE CH DE ES FR GB IT LI SE**

(56) Entgegenhaltungen:
**CH-A- 348 857**
**CH-A- 582 038**
**DE-A- 2 152 319**
**DE-A- 3 516 501**
**FR-A- 2 273 618**

**WERKSTATT UND BETRIEB, Band 109, Nr. 4, April 1976,**
**Seiten 229-234; J. ROHMERT et al.:**
**"Zahnflankenläppen spiralverzahnter Kegelräder"**
**PATENT ABSTRACTS OF JAPAN, Band 7,**
**Nr. 149 (M-225)[1294], 30. Juni 1983; &**
**JP-A-58 59 728 (HONDA GIKEN KOGYO K.K.) 08-04-1983**

(73) Patentinhaber: **Werkzeugmaschinenfabrik**
**Oerlikon-Bührle AG, Birchstrasse 155,**
**CH-8050 Zürich(CH)**

(72) Erfinder: **Ginier, Ami, Entw. Ing., Lärchenstrasse 8,**
**CH-8962 Bergdietikon(CH)**

## Beschreibung

Die Erfindung betrifft eine Maschine zum Läppen von zwei bogenverzahnten Kegelrädern nach dem Oberbegriff des Patentanspruches 1.

Die zur Zeit bekannten Läppmaschinen, welche zum Läppen eines Kegelrad- oder Hypoidpaares dienen, z.B. gemäss CH-A 530 845 und CH-A 580 461, weisen eine Einrichtung zum Antrieb des einen Kegelrades und zum Abbremsen des anderen Kegelrades sowie eine Steuereinrichtung zum Einstellen des gewünschten Läppdruckes auf. Während des Läppvorganges können die beiden sich drehenden Spindeln, auf denen jeweils die zwei Kegelräder aufgespannt sind, so zueinander bewegt werden, dass bei balligtragenden Zähnen der Läppkontakt über die Zahnflanken wandert. Die Läppmaschinen weisen zusätzliche Mittel auf, um die Zusatzbewegungen in Richtung V,H und J zu erzeugen und zu steuern. Neben den erwähnten Läppbewegungen stellt der Läppdruck einen sehr wichtigen Parameter dar. Die entsprechende Walzenpressung wird durch den Bremsantrieb in beiden Drehrichtungen (Zug- und Schubflanke) erzeugt. Bei den bekannten Läppeinrichtungen hat die sogenannte Walzenpressung auf allen Zahnflanken den gleichen Wert (z.B. 0,05 Newton/mm²). Diese Eigenschaft wirkt sich vor allem dann nachteilig aus, wenn durch das Härten der einzelnen Zahnräder ein asymmetrischer Härteverzug auftritt. Da die Parameter H und V durch den Zahn mit dem grössten Härteverzug definiert sind, werden danach alle Zahnflanken gleicherweise geläppt.

Die Erfindung, wie sie in den Ansprüchen gekennzeichnet ist, löst die Aufgabe, eine Läppmaschine zu schaffen, mit der die beim Härten von Kegelzahnrädern entstehenden asymmetrischen Härteverzüge beim Läppen korrigiert werden.

Diese Aufgabe wird an einer Maschine nach dem Oberbegriff von Patentanspruch 1 durch die kennzeichenenden Merkmale gelöst.

Die durch die Erfindung erreichten Vorteile sind im wesentlichen darin zu sehen, dass durch das Selektivläppen an den einzelnen Zahnflanken ein unterschiedlich starker Abtrag erwirkt werden kann. Insbesondere bei in kleinen Serien hergestellten grossen Tellerrädern, bei denen solche asymmetrischen Härteverzüge vermehrt auftreten, ermöglicht das erfindungsgemässe Selektivläppen eine wirtschaftliche Korrekturbehandlung.

Nachfolgend wird anhand von Zeichnungen ein Ausführungsbeispiel der Erfindung erläutert:

Es zeigen:

Fig. 1 eine schematische Darstellung des erfindungsgemässen Antriebesystems einer Läppmaschine;
Fig. 2 eine schematische Darstellung eines elektronischen Getriebes;
Fig. 3 eine schematische Darstellung eines Zweipunktreglers;
Fig. 4 a-d Diagramme des relativen Drehmomentverlaufes beim Selektivläppen, wobei das Kegelrad zehn Zähne aufweist, und
Fig. 5 a-d Diagramme der Ausgangssignale des Zweipunktreglers bezogen auf die Figuren 4a, 4c und 4d.

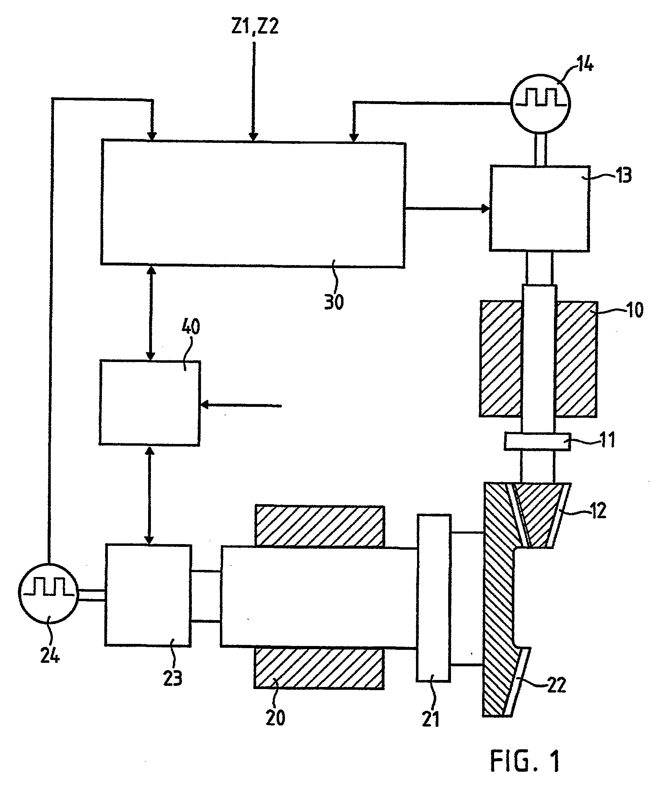

Gemäss Fig.1 enthält eine Läppmaschine zwei Spindelstöcke 10 und 20 mit je darin drehbar angeordneten Spindeln 11 und 21. An den beiden Spindeln 11 und 21 wird je eines der beiden zu läppenden Kegelräder 12 und 22 aufgespannt. Der Läppvorgang an sich mit den auszuführenden Zusatzbewegungen der Spindeln bzw. der Spindelstöcke wird als bekannt vorausgesetzt (siehe CH-A 530 845) und hier nicht näher erläutert.

Erfindungsgemäss werden nun beide Spindeln 11 und 21 je von einem separaten drehzahlgeregelten Elektromotor 13 und 23 angetrieben. Durch ein elektronisches Getriebe 30, auch elektrische Welle genannt, sind die beiden Elektromotoren 13 und 23 in zeitlicher Abhängigkeit und synchron miteinander verbunden. Einer der beiden Elektromotoren, in diesem Beispiel der Elektromotor 13, ist als Leitmotor und der andere Elektromotor, beispielsweise der Elektromotor 23, ist als Folgemotor ausgebildet. Ein untergeordneter, zusätzlicher Drehmomentregler 40 ist zwischen dem elektronischen Getriebe 30 und dem Folgemotor 23 angeordnet. Je ein Impulsgeber 14 und 24 übermittelt die genaue Winkellage der zugeordneten Spindel bzw. Elektromotorwelle.

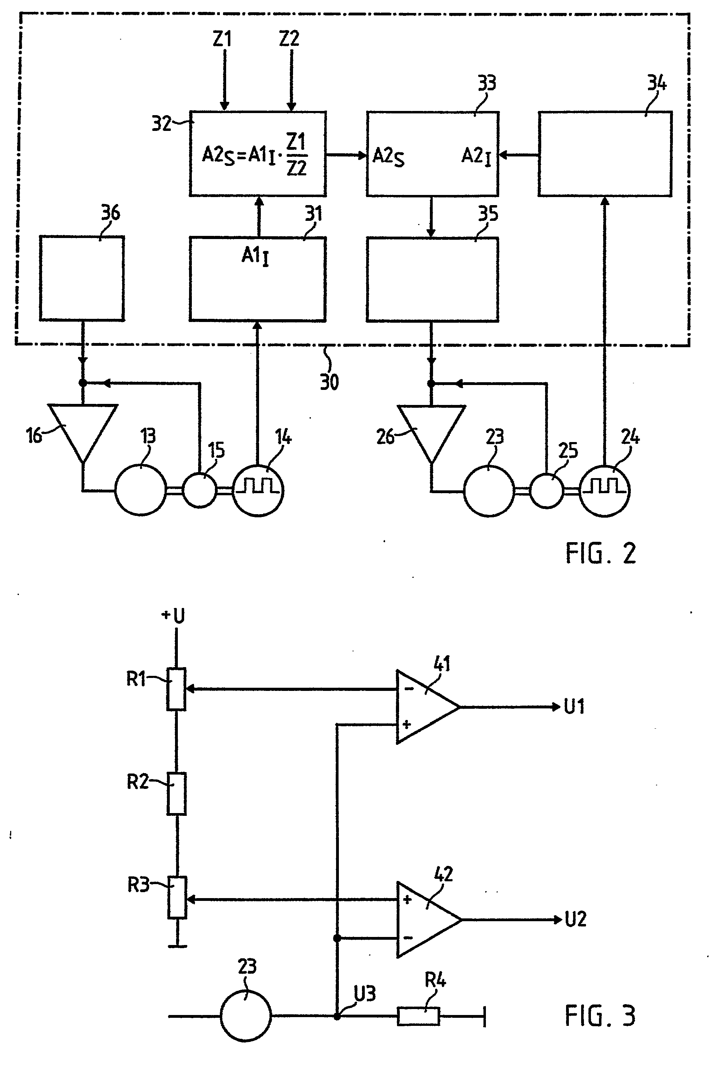

Aus anderen Gebieten der Technik ist es bekannt, mit einem elektrischen Steuersystem bzw. einem elektronischen Getriebe, zwei Elektromotoren miteinander synchron zu verbinden (siehe z.B. die Patentschrift CH 582 038). Das vorliegende elektronische Getriebe 30 ist somit in bekannter Weise aufgebaut und enthält zusätzlich zu den in Fig.2 dargestellten Funktionen weitere, nicht dargestellte Funktionen wie Bedienungstafel mit Bildschirm und Funktionstasten, ein NC-System sowie Ein- und Ausgänge zur Läppmaschine etc.

Gemäss Fig.2 ist jedem der beiden Elektromotoren 13 und 23 je ein Tachogenerator 15 und 25 und je ein Drehzahlregler 16 und 26 zugeordnet. Das elektronische Getriebe 30, innerhalb der strichpunktierten Linie, enthält die folgenden Funktionselemente: eine erste Istwert-Erfassung 31, einen Rechner 32, einen Vergleicher 33, eine zweite Istwert-Erfassung 34, einen Lageregler 35 und einen Führungsgeber 36. Die Istwert-Erfassung 31 ist einerseits mit dem Impulsgeber 14 des Leitmotors 13 und andererseits mit dem Rechner 32 verbunden. Der Rechner 32 weist unter anderem Eingänge Z1 und Z2 sowie einen Ausgang zum Vergleicher 33 auf. Der Impulsgeber 24 des Folgemotors 23 ist über die zweite Istwert-Erfassung 34 ebenfalls mit dem Vergleicher 33 verbunden. Der Ausgang des Vergleichers 33 ist über den Lageregler 35 gemäss Fig.2 direkt bzw. gemäss Fig.1 indirekt über den Drehmomentregler 26 des Folgemotors 23 zugeführt. Der Drehzahlregler 16 des Leitmotors 13 ist an den Führungsgeber 36 angeschlossen.

In Fig.3 ist ein als Zweipunktregler ausgebildeter Drehmomentregler 40 detaillierter dargestellt. In den Stromkreis des Folgemotors 23 ist ein Widerstand R4 zur Stromerfassung eingesetzt. Die Spannung U3 über dem Widerstand R4 wird dem positiven Eingang eines Komparators 41 und dem negativen Eingang eines Komparators 42 zugeführt. Zwei Potentiometer R1 und R3 und ein zwischengeschalteter Widerstand R2 sind in Serie an eine konstante Spannung +U angelegt. Der Abgriff des unter dem höheren Potential stehenden Potentiometers R1 ist mit dem negativen Eingang des Komparators 41 und der Abgriff des Potentiometers R3 ist mit dem positiven Eingang des Komparators 42 verbunden. Die beiden Ausgangssignale U1 und U2 der beiden Komparatoren 41 und 42 werden der Steuerschaltung des elektronischen Getriebes 30 zugeführt. Am Potentiometer R1 wird ein maximales und am Potentiometer R3 ein minimales relatives Läppdrehmoment eingestellt. Selbstverständlich kann der untergeordnete Zweipunktregler 40 in die Schaltungen des elektronischen Getriebes 30 und des Drehzahlreglers 26 integriert sein, z.B. gem.Fig.2.

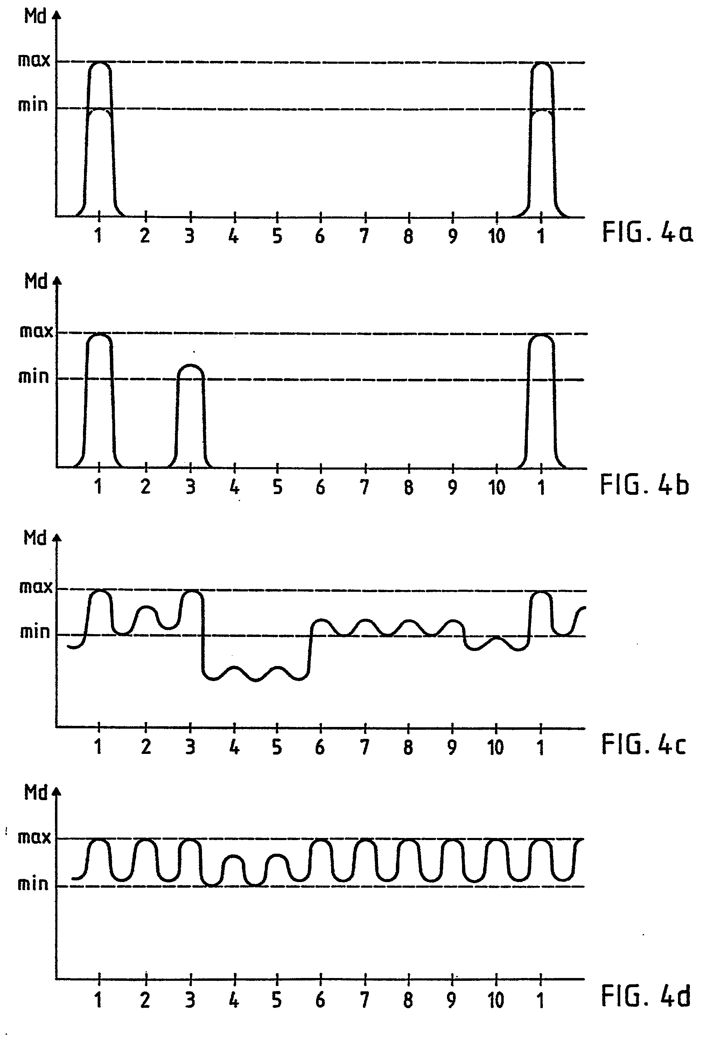

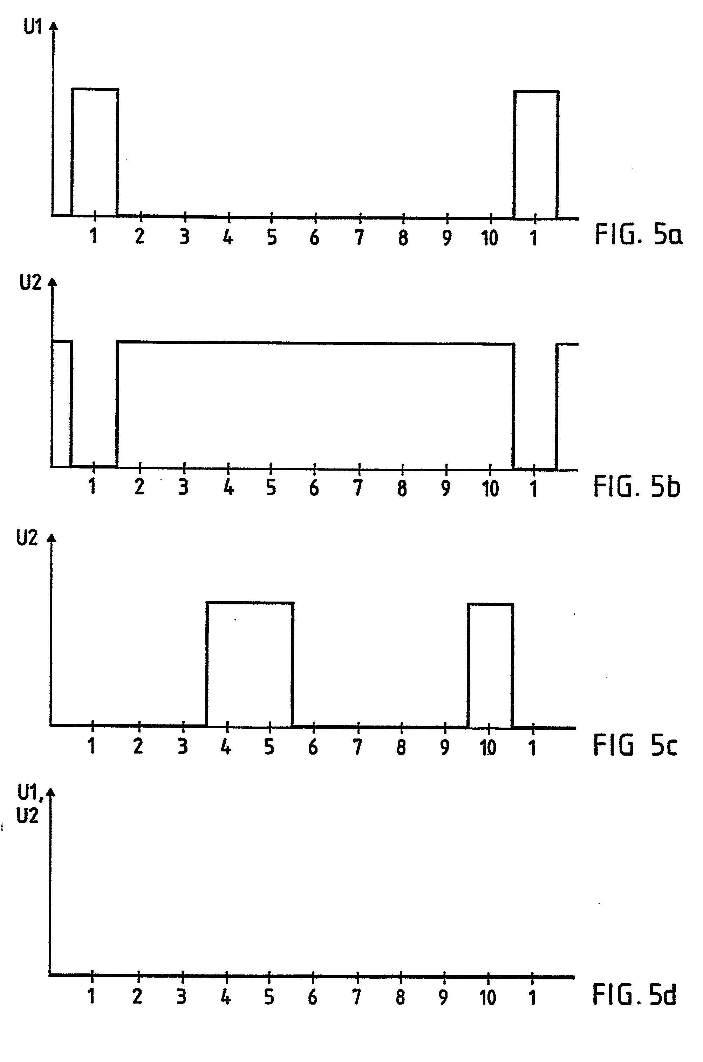

Die Diagramme der Fig.4 und 5 werden nachfolgend mit der Wirkungsweise erläutert.

Wirkungsweise:

Damit ein selektiver Läppvorgang eingeleitet werden kann, müssen die Zähne des einen Rades, hier des Ritzels 12, in die Zahnlücken des zweiten Rades, hier des Tellerrades 22, positioniert werden. Solche Einmitten-Verfahren werden hier als bekannt vorausgesetzt und deshalb nicht mehr erläutert. Von dieser Einmitt-Position, d.h. bei sich drehenden im Eingriff stehenden Ritzel 12 und Tellerrad 22, wird nun der Folgemotor 23 und damit das Tellerrad 22 numerisch in eine zusätzliche Drehgeschwindigkeit gesteuert, bis die Zähne mit dem höchsten Härteverzug in Berührung kommen. Sobald der am Widerstand R4 gemessene Drehmomentverlauf einen am Potentiometer R1 festgelegten maximalen Wert max erreicht hat, siehe Fig.4a und 5a, liefert der Komparator 41 ein Signal U1 an die Schaltung des elektronischen Getriebes 30 und stoppt damit die zusätzliche Drehgeschwindigkeit. Ritzel 12 und Tellerrad 22 drehen sich nun synchron mit der gleichen tangentialen Geschwindigkeit.

Mit der dargestellten Anordnung gemäss Fig.1 und 2 besteht nun die Möglichkeit, die Spindel 21 als Folgeachse elektronisch hochgenau mit der Spindel 11 als Leitachse zu koppeln. Als Führungsgrösse dienen die erzeugten Impulse im Impulsgeber 14 des Leitmotors 13, welche den verfahrenen Winkel $A1_I$ der Leitachse darstellen. Diese Impulse werden in der ersten Istwert-Erfassung 31 erfasst und aufbereitet und dann dem nachgeschalteten Rechner 32 zugeführt. Nachzutragen ist, dass die Solldrehzahl des Leitmotors 13 durch den Führungsgeber 36 dem Drehzahlregler 16 eingegeben wird. Zusammen mit den Eingabedaten Z1, d.h. Anzahl der Zähne des Ritzels 12, und Z2, d.h. Anzahl der Zähne des Tellerrades 22, sowie dem Istwert $A1_I$ wird der Solldrehwinkel $A2_S$ des Folgemotors 23 im Rechner 32 zyklisch berechnet nach folgender Formel:

$$A2_S = A1_I \, \frac{Z1}{Z2}$$

Der hochgenau und rasch ermittelte Solldrehwinkel $A2_S$ wird mit dem vom Impulsgeber 24 gelieferten und in der zweiten Istwert-Erfassung 34 erfassten und aufbereiteten Istdrehwinkel $A2_I$ des Folgemotors 23 im Vergleicher 33 verglichen. Die Differenz, Schleppabstand genannt, wird dem Lageregler 35 zugeführt und verarbeitet. Um eine hohe Koppelsteifigkeit zu erzielen, wird das Uebertragungsverhalten des Lagereglers 35 mit einer adaptiven Vorsteuerung derart beeinflusst, dass der Schleppabstand während dem Läppbetrieb einen minimalen Wert einnimmt. Der Ausgang des Lagereglers 35 wird dem Drehzahlregler 26 des Folgemotores 23 zugeführt.

Der Drehmomentverlauf beim Selektivläppen ist in den Fig.4a-d und die Diagramme der Ausgangssignale U1 und U2 der Komparatoren 41 und 42, also des Zweipunktreglers 40, sind in den Fig.5a-d für das Selektivläppen aufgezeichnet. Gemäss Fig.4a wirkt auf den Zahn Nr. 1 eines zehn Zähne aufweisenden Tellerrades 22 ein Läppdrehmoment Md, weil dieser Zahn den höchsten Härteverzug aufweist. In der Fig.5a ist der Ausgang U1 des Komparators 41 für das Selektivläppen des Zahnes Nr. 1 dargestellt, d.h. wenn der relative Läppdruck den am Potentiometer R1 eingestellten Maximalwert max, siehe Fig.4, erreicht, erscheint ein Signal U1, welches, wie oben erwähnt, das Abschalten der zusätzlichen Drehgeschwindigkeit bewirkt. In Fig.5b ist das Signaldiagramm am Ausgang des Komparators 42 während des Selektivläppens des Zahnes Nr. 1 dargestellt. Für den Zahn Nr. 1 erscheint am Ausgang des Komparators 42 kein Signal, weil das relative Läppdrehmoment grösser als der am Potentiometer R3 eingestellte Minimalwert min, siehe Fig.4, ist. Für die Zähne 2 - 10 erscheint ein Signal am Ausgang des Komparators 42, weil das relative Läppdrehmoment für diese Zähne kleiner als der eingestellte Minimalwert ist. Diese Signalkonstellation hat aber auf die Schaltung des elektronischen Getriebes 30 keinen Einfluss. Wird nun durch den Läppeffekt der eingestellte Minimalwert am Zahn Nr. 1 unterschritten, so wird auch für den Zahn Nr. 1 am Ausgang des Komparators 42 ein positives Signal abgegeben. Damit wird innerhalb einer Umdrehung des Tellerrades 22 für alle Zähne ein positives Signal abgegeben, bzw. das Signal sinkt nun für keinen der Zähne mehr auf Null. In der Schaltung des elektronischen Getriebes 30 bzw. in deren Auswerteelektronik wird nun wiederum eine zusätzliche Drehgeschwindigkeit für den Folgemotor 23 eingeschaltet. Diese zusätzliche Drehbewegung wird dann wiederum durch den Komparator 41 abgeschaltet, wenn das relative Läppdrehmoment an einem oder mehreren der Zähne den eingestellten Maximalwert überschreitet. Gemäss Fig.4b können dann beispielsweise schon die Zähne 1 und 3 durch Selektivläppen bearbeitet werden.

Dieser Vorgang wird mit Hilfe des Zweipunktreglers, also Ausschalten einer zusätzlichen Winkelgeschwindigkeit beim Erreichen des Maximalwertes und Einschalten der zusätzlichen Winkelgeschwindigkeit beim Unterschreiten des Minimalwertes, fortgesetzt, bis alle Zug- bzw. Schubflanken geläppt werden. Die Figuren 4c und 5c geben Auskunft über ein Zwischenläppergebnis, bei dem nur noch die Zähne 4, 5 und 10 vom Selektivläppen nicht erfasst werden.

Erst wenn alle Zähne im gleichen selektiven Läppvorgang bearbeitet werden, wird der selektive Läppvorgang automatisch beendet. Aus Fig.4d ist ersichtlich, dass der über dem Widerstand R4 gemessene Drehmomentverlauf aufzeigt, dass nun alle Zähne durch den Läppprozess erfasst werden. Befindet sich das Läppdrehmoment für alle Zähne innerhalb der beiden gesetzten Grenzwerte max und min, erscheint am Ausgang beider Komparatoren 41 und 42 das Signal 0 für alle Zähne, siehe Fig.5d. Dadurch wird der Auswerteelektronik signalisiert, dass der Läppvorgang abgeschlossen werden kann.

Durch dieses Selektivläppen von Zahnflanken an bogenverzahnten Kegelrädern wird eine Verbesserung der Zahnoberflächen und auch der Laufeigenschaften erreicht. Rundlauffehler werden weitgehend eliminiert und der Einzeleingriff stark verbessert. Sowohl die Uebertragungsfähigkeit wie auch die Laufruhe wird positiv beeinflusst.

## Patentansprüche

1. Maschine zum Läppen von zwei bogenverzahnten Kegelrädern (12,22) mit einem drehzahlgeregelten Elektromotor (13) zum Antreiben des einen (12) der beiden Kegelräder, dadurch gekennzeichnet, dass das andere Kegelrad (22) durch einen lage- und drehzahlgeregelten Elektromotor (23) angetrieben wird und ein elektronisches Getriebe (30) vorhanden ist, wobei der eine Elektromotor als Leitmotor (13) und der andere als Folgemotor (23) eingesetzt sind und das elektronische Getriebe (30) den Folgemotor (23) in Abhängigkeit der Drehzahl des Leitmotors (13) und dem Zähnezahlverhältnis der beiden Kegelräder (12,22) synchron dem Leitmotor (13) nachführt, sowie dass im Zusammenwirken mit dem elektronischen Getriebe (30) ein Mittel (40) vorhanden ist zum Steuern und Regeln eines wählbaren relativen Läppdrehmomentes, zum Selektivläppen.

2. Maschine nach Anspruch 1, dadurch gekennzeichnet, dass das Mittel (40) als Zweipunktregler ausgebildet ist zum Regeln innerhalb zweier wählbarer Grenzwerte.

3. Maschine nach Anspruch 2, dadurch gekennzeichnet, dass der Zweipunktregler Mittel (R1,R3) enthält zum Einstellen der zwei Grenzwerte für das relative Läppdrehmoment.

4. Maschine nach Anspruch 2, dadurch gekennzeichnet, dass der Zweipunktregler (40) Ausgangssignale (U1 und U2) aufweist zum automatischen Beenden des Selektivläppens.

## Claims

1. Machine for lapping two bevel gears having teeth curved in their longitudinal direction (12, 22), with a speed-adjusted electric motor (13) for driving one (12) of the two bevel gears, characterised in that the other bevel gear (22) is driven by an electric motor (23) with position and speed adjustment and an electronically-controlled gear train (30) is present, one electric motor being used as the lead motor (13) and the other as the follower motor (23) and the electronically-controlled gear train (30) adjusting the follower motor (23) synchronously to the lead motor (13) in response to the speed of the lead motor (13) and to the ratio of the number of teeth on the two bevel gears (12, 22), and in that in combined operation with the electronically-controlled gear train (30) there is a means (40) for controlling and regulating a selectable relative lapping torque, for selective lapping.

2. Machine according to claim 1, characterised in that the means (40) is a two-position controller for regulation within two selectable limiting values.

3. Machine according to claim 2, characterised in that the two-position controller contains means (R1, R3) for setting the two limiting values for the relative lapping torque.

4. Machine according to claim 2, characterised in that the two-position controller (40) presents output signals (U1 and U2) for automatically concluding the selective lapping operation.

## Revendications

1. Machine pour roder deux roues coniques (12, 22) à denture bombée à l'aide d'un moteur électrique (13) régulé en vitesse de rotation pour entraîner l'une (12) des deux roues coniques, machine caractérisée en ce que l'autre roue conique (22) est entraînée par un moteur électrique (23) dont la position et la vitesse de rotation sont réglées, et comporte une transmission électronique (30), l'un des moteurs électriques fonctionnant comme moteur directeur (13) et l'autre comme moteur suiveur (23), la transmission électronique (30) asservissant en synchronisme le moteur suiveur (23) en fonction de la vitesse de rotation du moteur directeur (13) et du rapport du nombre de dents des deux roues coniques (12, 22), ainsi qu'un moyen (40) coopérant avec la transmission électrique (30) pour commander et régler un couple de rodage relatif, sélectionné pour effectuer un rodage sélectif.

2. Machine selon la revendication 1, caractérisée en ce que le moyen (40) est un régulateur à deux points pour assurer la régulation dans deux limites choisies.

3. Machine selon la revendication 2, caractérisée en ce que le régulateur en deux points comporte des moyens (R1, R3) pour régler deux valeurs limites du couple de rodage relatif.

4. Machine selon la revendication 2, caractérisée en ce que le régulateur à deux points (40) présente des signaux de sortie (U1 et U2) pour terminer automatiquement le rodage sélectif.

Z1,Z2

FIG. 1

FIG. 2

FIG. 3

FIG. 4a

FIG. 4b

FIG. 4c

FIG. 4d

FIG. 5a

FIG. 5b

FIG 5c

FIG. 5d